# EUROPÄISCHE PATENTSCHRIFT

(11) **EP 2 885 586 B1**
(45) Veröffentlichungstag und Bekanntmachung des Hinweises auf die Patenterteilung: **02.08.2017**
(21) Anmeldenummer: 13748012.5
(22) Anmeldetag: 07.08.2013
(51) Int. Cl.: F24J 2/46, F24J 2/05

(54) **ABSORBERROHR**
ABSORBER TUBE
TUBE ABSORBEUR

(30) Priorität: 14.08.2012 DE 102012214412
(43) Veröffentlichungstag der Anmeldung: 24.06.2015
(73) Patentinhaber: Schott Solar AG, 55122 Mainz (DE)
(72) Erfinder: BENZ, Nikolaus, 55131 Mainz (DE); KUCKELKORN, Thomas, 07743 Jena (DE)
(74) Vertreter: Mehler Achler
(86) Internationale Anmeldenummer: PCT/EP2013/066553
(87) Internationale Veröffentlichungsnummer: WO 2014/026891

(56) Entgegenhaltungen:
- DE-A1- 10 231 467
- DE-A1-102009 045 100
- DE-A1-102009 047 548
- JP-A- S58 168 846

## Beschreibung

Die Erfindung betrifft ein Absorberrohr gemäß dem Oberbegriff des Anspruchs 1.

Die DE 10 231 467 B4 beschreibt ein solches Absorberrohr, das insbesondere für Parabolrinnenkollektoren in solartechnischen Kraftwerken zur Anwendung kommt. Das Absorberrohr weist ein zentrales Metallrohr und ein das zentrale Metallrohr umgebendes Hüllrohr aus Glas auf. Das Glasrohr ist an beiden Enden mit einem Glasmetallübergangselement versehen, an dem jeweils eine Dehnungsausgleichseinrichtung oder ein Anschlusselement angreift. Die Dehnungsausgleichseinrichtung ist mindestens teilweise im Ringraum zwischen dem Metallrohr und dem Glasübergangselement angeordnet.

Das Anschlusselement kann sich in dem Ringraum zwischen der Dehnungsausgleichseinrichtung und dem Metallrohr erstrecken, wodurch bei einer konischen Ausgestaltung des Anschlusselementes flach auftreffende Strahlung sowie die Abstrahlung des Metallrohres auf das Metallrohr zurückreflektiert wird.

Das Anschlusselement kann sich auch im Ringraum zwischen Dehnungsausgleichseinrichtung und Glasrohr erstrecken und ist in diesem Fall mit dem Glasmetallübergangselement verbunden. Das Anschlusselement besitzt ein Befestigungselement in Form einer Ringscheibe, mit der das Anschlusselement an der Dehnungsausgleichseinrichtung befestigt ist, die einen Faltenbalg umfassen kann.

Aus der DE 60 223 711 T2 ist ein Absorberrohr bekannt, bei dem das Glasmetallübergangselement und die Dehnungsausgleichseinrichtung in Gestalt eines Faltenbalgs in axialer Richtung hintereinander angeordnet sind. An der Außenseite sind ein erstes Schildelement, das den Faltenbalg abschirmt, und ein zweites Schildelement vorgesehen, das das Glasmetallübergangselement vor einfallender Strahlung abschirmt. Außerdem ist im Ringraum zwischen Hüllrohr und Metallrohr im Bereich des Glasmetallübergangselementes ein interner Strahlungsschild angeordnet. Das interne Strahlungsschild ist mit Haltearmen im Faltenbalg eingehängt.

Ein Nachteil dieser Anordnung mit Faltenbalg mit Glasmetallübergangselement ist die relativ große Baulänge, was zu einer Verminderung der freien Apertur und damit des Wirkungsgrades führt.

Durch eine der beiden äußeren Schildelemente wird das Glasmetallübergangselement zunächst vor direkter Bestrahlung von außen geschützt. Das innere, einen L-förmigen Querschnitt aufweisende Strahlungsschild weist im Bereich des Glasmetallübergangselementes lediglich Stützarme auf, so dass flach einfallende und reflektierte Strahlung vom Metallrohr im Bereich zwischen den Stützarmen auf das Glasmetallübergangselement auftreffen kann. Lediglich ein Teil dieser Strahlung wird von dem inneren Strahlungsschild abgefangen.

Diese Konstruktion hat den weiteren Nachteil, dass sie selbst Strahlung absorbiert und sich dadurch erwärmt. Das innere Strahlungsschild ist thermisch nur unzureichend über die Stützarme an den Faltenbalg angekoppelt, so dass der Anteil der Strahlung, der vom Ringbauteil absorbiert wird, größtenteils wieder durch Strahlung abgegeben werden muss. Ein erheblicher Anteil der Wärmeabstrahlung trifft wiederum das Glas-Metall-Übergangselement. Hierdurch erfährt das Glasmetallübergangselement einen sekundären Wärmeeintrag durch Abstrahlung vom erhitzten Strahlungsschild.

Sowohl DE10231467B4 als auch DE60223711T2 offenbaren einen außen liegenden Schutz des Glas-Metall-Überganges und der Dehnungsausgleichseinrichtung. Dieser außen liegende Schutz wird heute in der Regel nach der Installation des Receivers im Kraftwerk montiert. Dazu werden Reflektorbleche nach dem Zusammenschweißen der Receiver im Feld montiert.

Ein Nachteil hierbei ist, dass der Glas-Metall-Übergang während des Transportes und bei der Installation ungeschützt ist und dadurch leicht beschädigt werden kann. Während des Montageprozesses können Kratzer im Hüllrohr entstehen, wobei Kratzer in der Nähe des Glas-Metall-Übergangselementes besonders kritisch sind und zur Schwächung des Absorberrohres und zu späterem Glasbruch im Betrieb führen können.

Aufgabe der Erfindung ist es, ausgehend von dem Stand der Technik gemäß der DE 10 231 467 B4 die Lebensdauer des Absorberrohres weiter zu erhöhen.

Diese Aufgabe wird mit den Merkmalen des Anspruchs 1 gelöst.

Es ist vorgesehen, dass an mindestens einem Ende des Absorberrohres im Ringraum mindestens eine Abschirmeinrichtung angeordnet ist, die einen ersten ringscheibenförmigen Abschnitt aufweist, der in axialer Richtung beabstandet vor der Stirnfläche angeordnet ist und mindestens den Verbindungsbereich von Anschlusselement und innerem Ende der Dehnungsausgleichseinrichtung abdeckt.

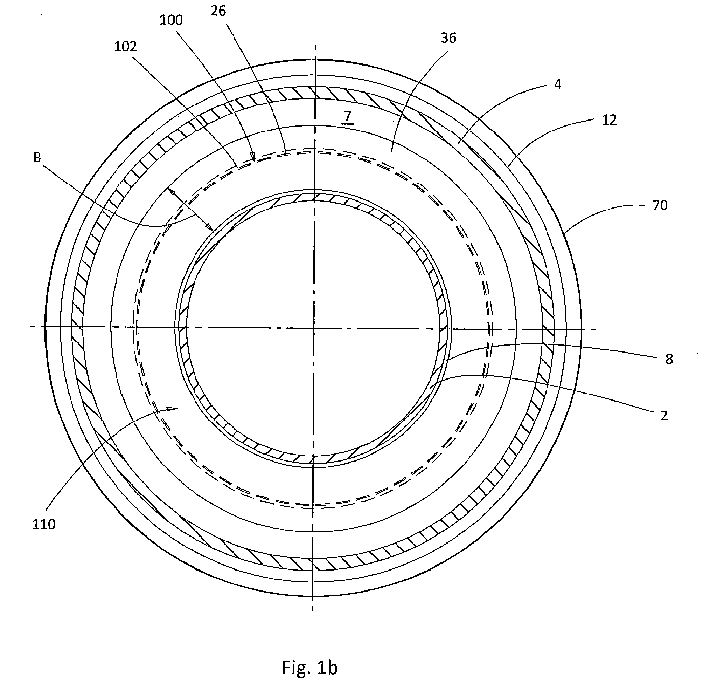

Die Stirnfläche und der Verbindungsbereich werden im Zusammenhang mit der Figur 1b erläutert.

Der erste ringscheibenförmige Abschnitt hat den Vorteil, dass er nicht nur den Verbindungsbereich der Dehnungsausgleichseinrichtung und des Anschlusselementes sondern auch das Glasmetallübergangselement vor vom Metallrohr reflektierter Strahlung schützt.

Es hat sich herausgestellt, dass das Glasmetallübergangselement und die Dehnungsausgleichseinrichtung bezüglich der Standzeit des Absorberrohres kritische Komponenten darstellen.

Zwar wird die vom Metallrohr reflektierte Strahlung oder abgestrahlte Strahlung zum Teil durch die Dehnungsausgleichseinrichtung vom Glasmetallübergangselement ferngehalten, da die Dehnungsausgleichseinrichtung unter dem Glasmetallübergangselement angeordnet ist, was aber mit dem Nachteil verbunden ist, dass die Strahlung dann auf die Dehnungsausgleichseinrichtung auftrifft und auf Dauer das Material der Dehnungsausgleichseinrichtung, insbesondere auch den Bereich, wo die Dehnungsausgleichseinrichtung mit dem Anschlusselement verbunden ist, geschädigt wird. Dort kann es unter Umständen zu Undichtigkeiten an den Kontaktstellen kommen, so dass dann im Ringraum das erforderliche Vakuum verloren geht oder die Edelgasfüllung im Ringraum durch Lufteinbruch verunreinigt wird. Mittels der Abschirmeinrichtung wird diese Schädigung vermieden. Es hat sich gezeigt, dass mit dem ersten ringscheibenförmigen Abschnitt der Abschirmeinrichtung im Ringraum des Absorberrohres die Standzeit des Absorberrohres wirksam erhöht werden kann.

Über die Größe der Fläche des ersten ringscheibenförmigen Abschnitts kann die Menge der abzuschirmenden Strahlung gezielt eingestellt werden.

Vorzugsweise deckt der erste ringscheibenförmige Abschnitt mindestens 50% der Stirnfläche, insbesondere bevorzugt die gesamte Stirnfläche ab.

Die Strahlungsenergie, die auf den ersten ringscheibenförmigen Abschnitt auftrifft, führt zur Erwärmung des ersten ringscheibenförmigen Abschnitts und wird durch Wärmeleitung in der Fläche der Abschirmeinrichtung verteilt, wodurch das Temperaturniveau abgesenkt wird. Durch die vorzugsweise glatte Oberfläche wird der größte Teil der Strahlung direkt nach außen bzw. zum Metallrohr reflektiert, während im Stand der Technik ein größerer Teil der Strahlung in den Balgschlaufen absorbiert wird. Der absorbierte Teil der Strahlung wird durch Wärmeleitung in der gesamten Abschirmeinrichtung verteilt, wodurch ein gleichmäßiges Temperaturniveau über die gesamte Abschirmeinrichtung erreicht wird. Vorzugsweise ist die Abschirmeinrichtung an ein metallisches Bauteil des Absorberrohres - mit Ausnahme des Metallrohres - angeschlossen, so dass die Wärme auch abgeleitet werden kann. Dies wird im Einzelnen noch erläutert.

Der erste ringscheibenförmige Abschnitt kann senkrecht zur Längsachse L angeordnet sein. Es ist jedoch besonders bevorzugt, dass der erste ringscheibenförmige Abschnitt bezüglich einer Senkrechten S auf der Längsachse L des Absorberrohres um einen Winkel α ≥ 0 geneigt angeordnet ist. Der erste ringscheibenförmige Abschnitt ist vorzugsweise derart geneigt angeordnet, dass ein radial außenliegender Rand axial weiter in den Ringraum hineinragt als ein radial innenliegender Rand des ersten ringscheibenförmigen Abschnitts.

Diese Ausgestaltung hat den Vorteil, dass ein großer Teil der schräg einfallenden Strahlen nicht auf die Abschirmvorrichtung trifft, wo sie teilweise zur nicht nutzbaren Erwärmung derselben führt, sondern direkt auf das Metallrohr auftritt und dort in nutzbare Wärme umgewandelt wird. Die Neigung des ersten ringscheibenförmigen Abschnitts vergrößert die wirksame Fläche des Absorberrohres im Vergleich zu einem nicht geneigten Stirnflächenabschnitt.

Vorzugsweise liegt der Winkel α im Bereich von 0° - 30°. Dieser Bereich ist bevorzugt, weil im Jahresmittel bei üblichen Aufstellorten für solarthermische Parabolrinnenkraftwerke die Sonneneinstrahlung besonders häufig in einem Winkel von ca. 20° auftritt.

Bei einem Winkel > 30° würde der radial außen liegende Rand der Abschirmeinrichtung axial zur Rohrmitte hin verschoben und damit einen Teil des Metallrohres überdecken, wodurch die effektive Länge des Metallrohres insbesondere bei nahezu senkrechter Einstrahlung vermindert würde.

Die Abschirmeinrichtung erstreckt sich mindestens teilweise in den Ringraumabschnitt zwischen dem Glasmetallübergangselement und dem Anschlusselement. Die Wärme des ersten ringscheibenförmigen Abschnitts wird dadurch besser verteilt und in den kühleren Bereich des Ringraumabschnittes geleitet.

Es ist daher bevorzugt, dass der erste ringscheibenförmige Abschnitt an seinem radial außenliegenden Rand in einen ersten rohrförmigen Abschnitt übergeht, der sich in den Ringraumabschnitt erstreckt. Der rohrförmige Abschnitt ist vorzugsweise zylindrisch oder konisch ausgebildet.

Die konische Ausbildung hat den Vorteil, dass ein guter Kontakt mit dem rohrförmigen Abschnitt des Anschlusselements zwecks Wärmeleitung hergestellt werden kann, ohne dass hochgenaue Fertigungstoleranzen für das Anschlusselement und den rohrförmigen Abschnitt der Abschirmeinrichtung erforderlich sind.

Die Abschirmeinrichtung weist vorzugsweise einen zweiten ringscheibenförmigen Abschnitt auf. Dieser zweite ringförmige Abschnitt schließt sich an den ersten rohrförmigen Abschnitt an und trägt ebenfalls zur besseren Wärmeverteilung bei.

Der zweite ringscheibenförmige Abschnitt liegt vorzugsweise an dem Glasmetallübergangselement oder an einem Ringscheibenabschnitt des Anschlusselementes an. Dies hat den Vorteil, dass die Abschirmeinrichtung mittels des zweiten ringscheibenförmigen Abschnitts fixiert werden kann. Auch kann über diesen zweiten ringförmigen Abschnitt Wärme an das Glasmetallübergangselement oder an das Anschlusselement abgeleitet werden und somit an die Umgebung des Absorberrohres abgegeben werden.

Vorzugsweise weist das Glasmetallübergangselement eine Ringstufe auf, an der sich der zweite ringscheibenförmige Abschnitt der Abschirmeinrichtung abstützt.

Der zweite ringscheibenförmige Abschnitt erstreckt sich im zwischen der Dehnungsausgleichseinrichtung und dem Glasmetallübergangselement gebildeten Ringraum radial nach außen und kann sich gemäß einer Ausführungsform an dem Glasmetallübergangselement abstützen. Dadurch wird zwischen dem zweiten ringscheibenförmigen Abschnitt und einem außen angeordneten Ringscheibenabschnitt des Anschlusselementes eine Ringkammer abgetrennt, die zur Aufnahme von Gettermaterial dienen kann.

Eine andere Ausführungsform sieht vor, dass der zweite ringscheibenförmige Abschnitt der Abschirmeinrichtung an dem Ringscheibenabschnitt des Anschlusselementes anliegt. Diese Ausführungsform hat den Vorteil, dass die Wärme der Abschirmeinrichtung über den Ringscheibenabschnitt des Anschlusselementes nach außen abgeführt werden kann. Je nach Wahl der Ausführungsform ist der zweite rohrförmige Abschnitt der Abschirmeinrichtung länger oder kürzer ausgebildet.

Die Ringstufe des Glas-Metall-Übergangselementes führt auch zu einer Durchmessererweiterung des Glasmetallübergangselementes in Richtung Rohrende. Der Ringraum zwischen dem zweiten ringscheibenförmigen Abschnitt und den Ringscheibenabschnitt des Anschlusselementes wird dadurch vergrößert, so dass mehr Raum zur Aufnahme von Gettermaterial zur Verfügung steht. Außerdem verhindert die Ringstufe eine axiale Verschiebung des Abschirmelementes weg von der Stirnfläche der Dehnungsausgleichseinrichtung.

Vorzugsweise ist der erste rohrförmige Abschnittder Abschirmeinrichtung im Abstand zum Anschlusselement angeordnet. Insbesondere ist der erste rohrförmige Abschnitt im Abstand zum rohrförmigen Abschnitt des Anschlusselementes angeordnet. Dadurch wird der Ringraumabschnitt zwischen dem Glasmetallübergangselement und dem Anschlusselement verringert. Die Fläche des ersten ringscheibenförmigen Abschnittes der Abschirmeinrichtung kann dadurch vergrößert werden, so dass weniger Strahlung von unten an das Glasmetallübergangselement gelangen kann.

Vorzugsweise kontaktiert der erste rohrförmige Abschnitt das Anschlusselement, vorzugsweise den rohrförmigen Abschnitt des Anschlusselementes. Dieser formschlüssige Kontakt hat den Vorteil, dass die Wärme der Abschirmeinrichtung noch besser abgeleitet werden kann.

Vorzugsweise ist im Ringraumabschnitt ein Getter angeordnet. Ein Getter besteht aus einem Material, das in der Lage ist, Restgase in einem weitgehend evakuierten Raum chemisch oder physikalisch zu binden. Damit wird das zur Wärmeisolierung des Receivers erforderliche Vakuum im Ringraum zwischen dem Metallrohr und dem Hüllrohr über einen langen Betriebszeitraum aufrecht erhalten.

Die Anbringung des Getters in dem Ringraum hat den Vorteil, dass eine zusätzliche Halteeinrichtung für die Aufnahme des Getters entfällt. Der Getter wird vorzugsweise durch den Ringscheibenabschnitt des Anschlusselementes einerseits und durch den zweiten ringscheibenförmigen Abschnitt des Abschirmelementes gehalten.

Vorzugsweise erstreckt sich der erste ringscheibenförmige Abschnitt bis zu einem Ringraumabschnitt zwischen der Dehnungsausgleichseinrichtung und dem Metallrohr. Damit wird sichergestellt, dass keinerlei Wärmeabstrahlung vom Metallrohr auf die Stirnfläche der Dehnungsausgleichseinrichtung auftreffen kann.

Vorzugsweise weist die Abschirmeinrichtung einen zweiten rohrförmigen Abschnitt auf, der sich in diesen Ringraumabschnitt erstreckt. Dieser Abschnitt hat den Vorteil, dass der Faltenbalg vor Abstrahlung vom Metallrohr geschützt wird. Dieser zweite rohrförmige Abschnitt hat auch den Vorteil, dass die Verluste am Rohrende durch die Abschirmung minimiert werden können, weil die Abstrahlung des Metallrohres zurückreflektiert wird.

Vorzugsweise weist die Abschirmeinrichtung Öffnungen auf. Diese Öffnungen, die Löcher oder Schlitze sein können, sind vorzugsweise im zweiten ringscheibenförmigen Abschnitt und/oder im ersten rohrförmigen Abschnitt der Abschirmeinrichtung angeordnet. Damit in den Ringraum eindiffundierte Gase, insbesondere Wasserstoff, vom Getter gebunden werden können, ist es von Vorteil, wenn durch diese Öffnungen der Gasaustausch stattfinden kann.

Die Abschirmeinrichtung ist vorzugsweise ein ringförmiges Element. Das Element ist vorzugsweise als geschlossener Ring ausgebildet. Das ringförmige Element hat den Vorteil, dass die Einbaulage bezüglich der Rotation um die Längsachse des Absorberrohrs beliebig gewählt werden kann.

Vorzugsweise ist an der Außenseite des Hüllrohrs eine Außenschutzkappe vorgesehen, die mindestens das Glasübergangselement abdeckt. Durch die fest montierte Außenschutzkappe wird das Glasmetallübergangselement bereits während der letzten Schritte der Herstellung des Absorberrohres, beim Transport sowie beim Montageprozess im Kraftwerk vor mechanischer Beschädigung geschützt. Weiterhin schützt die Außenschutzkappe das Glasmetallübergangselement vor Strahlung, die vom Primärspiegel von außen kommt. Zudem wird Wärme vom Glasmetallübergangselement abgeleitet, nach außen geführt und durch Konvektion an die umgebende Luft abgegeben.

Beispielhafte Ausführungsformen werden nachfolgend anhand der Zeichnungen näher erläutert.

Es zeigen:
- Figur 1a: einen Längsschnitt durch ein Absorberrohr,
- Figur 1b: einen Querschnitt durch das Absorberrohr längs der Linie A-A,
- Figur 2a: eine vergrößerte Darstellung der Einzelheit X aus der Figur 1a,
- Figur 2b: eine Darstellung entsprechend der Figur 2a gemäß einer weiteren Ausführungsform,
- Figur 3: eine Darstellung entsprechend der Figur 2a gemäß einer weiteren Ausführungsform,
- Figur 4: eine perspektivische Darstellung der Abschirmeinrichtung gemäß einer ersten Ausführungsform und
- Figur 5: eine perspektivische Darstellung einer Abschirmeinrichtung gemäß einer weiteren Ausführungsform.

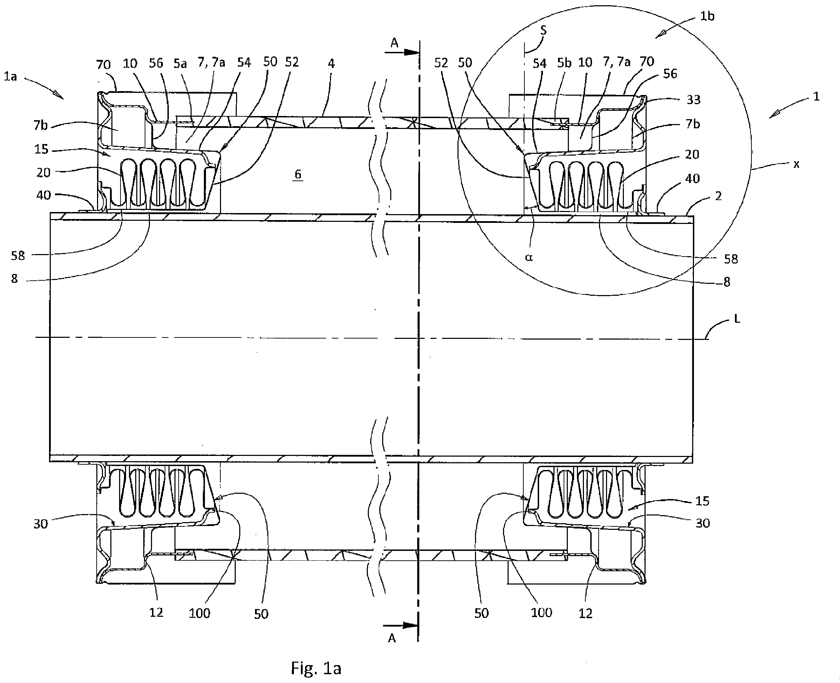

In der Figur 1a ist ein Absorberrohr 1 mit Längsachse L dargestellt, das ein Metallrohr 2 aufweist, durch das eine Wärmetauscherflüssigkeit strömt. Koaxial zu dem Metallrohr 2 ist ein Glashüllrohr 4 angeordnet, das beidseitig über jeweils ein Glasmetallübergangselement 10, ein Anschlusselement 30 sowie eine Dehnungsausgleicheinrichtung 20 in Gestalt eines Faltenbalgs und ein Befestigungselement 40 mit dem Metallrohr 2 verbunden ist. Bei dieser Anordnung befindet sich der Faltenbalg unter dem Anschlusselement 30 und begrenzt mit dem Anschlusselement 30 einen nach außen offenen äußeren Ringraum 15. Zwischen dem Glashüllrohr 4 und dem Metallrohr 2 wird ein innerer Ringraum 6 gebildet, der evakuiert oder mit einem Edelgas gefüllt ist.

An den Enden 1a,b des Absorberrohres 1 geht der Ringraum 6 in die beiden Ringraumabschnitte 7 und 8 über. Der Ringraumabschnitt 7 wird im Wesentlichen zwischen dem Glasmetallübergangselement 10 und dem Anschlusselement 30 ausgebildet. Der Ringraumabschnitt 8 befindet sich zwischen dem Metallrohr 2 und der Dehnungsausgleichseinrichtung 20.

Das Metallrohr 2 weist üblicherweise eine Beschichtung (nicht dargestellt) auf, die die durch das Glashüllrohr 4 einfallende Sonnenstrahlung möglichst optimal absorbiert. Die Figur 1 zeigt an beiden Enden 1a,b des Absorberrohres 1 eine Dehnungsausgleichseinrichtung 20. Es ist auch möglich das Absorberrohr 1 lediglich an einem Ende 5a oder 5b mit einer solchen Dehnungsausgleichseinrichtung 20 zu versehen.

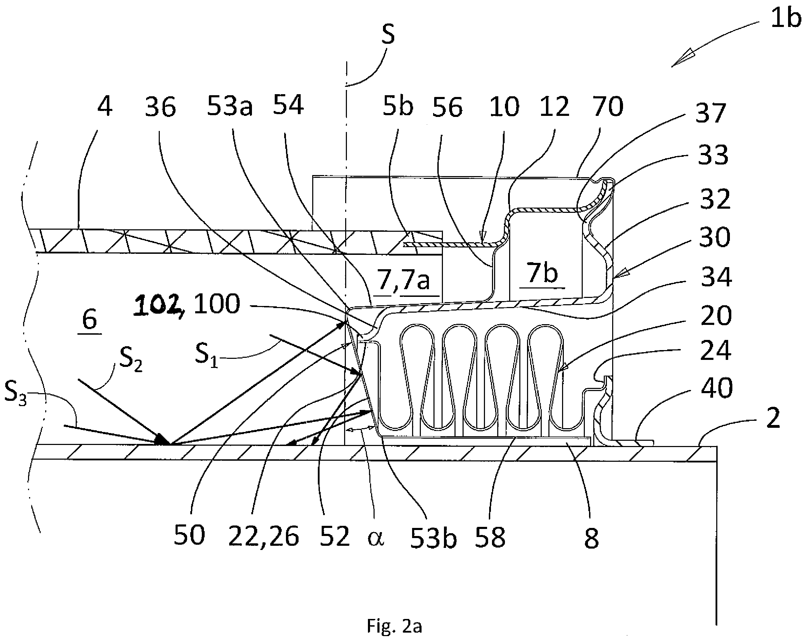

In der Figur 1a ist eine erste Ausführungsform einer Abschirmeinrichtung 50 dargestellt, die im Detail im Zusammenhang mit der Figur 2a beschrieben wird.

In der Figur 1b ist ein Schnitt durch das Absorberrohr 1 längs der Linie A-A in Figur 1a dargestellt, wobei die Abschirmeinrichtung 50 und die Außenschutzkappe 70 weggelassen wurden. Die axiale Draufsicht in Richtung Rohrende 1b auf das Anschlusselement 30 und die Dehnungsausgleichseinrichtung 20 definiert die Stirnfläche 110, die eine Breite B aufweist. Der Abschnitt 36 der Anschlusseinrichtung 30 und der Verbindungsabschnitt 26 der Dehnungsausgleichseinrichtung 20 sind an der Verbindungsstelle 102 miteinander verbunden. Die Stirnflächen der Abschnitte 26, 36 bilden den Verbindungsbereich 100.

In der Figur 2a ist eine vergrößerte Darstellung der Einzelheit X aus der Figur 1 dargestellt. Der Faltenbalg der Dehnungsausgleichseinrichtung 20 ist am äußeren Ende 24 am Befestigungselement 40 befestigt, das seinerseits am Metallrohr 2 befestigt, insbesondere angeschweißt ist. Am inneren Ende 22 weist der Faltenbalg einen Verbindungsabschnitt 26 auf, an dem das Anschlusselement 30 mit seinem Befestigungsabschnitt 36 befestigt ist.

Das Anschlusselement 30 weist einen konisch ausgebildeten rohrförmigen Abschnitt 34 auf, der den Ringraumabschnitt 7 begrenzt und am Rohrende in einen Ringscheibenabschnitt 32 übergeht. Der Ringscheibenabschnitt 32 besitzt eine nach innen weisende Sicke 37 und einen sich radial nach außen erstreckenden Befestigungsabschnitt 33. An dem Befestigungsabschnitt 33 ist das Glasmetallübergangselement 10 angeordnet sowie die Außenschutzkappe 70, die sich über das gesamte Glasmetallübergangselement bis über das Ende 5b des Glashüllrohrs 4 erstreckt. Das Glasmetallübergangselement 10 weist eine Ringstufe 12 auf, an der sich die Abschirmeinrichtung 50 abstützt.

Die Außenschutzkappe 70 wird vorzugsweise zusammen mit dem Glasmetallübergangselement 10 und dem Ringscheibenabschnitt 32 bei der Herstellung des Absorberrohres verschweißt oder mittels einer sonstigen form-, kraft- oder stoffschlüssigen Verbindung fest verbunden. Insofern dient die Außenschutzkappe beim anschließenden Transport als zusätzlicher Schutz des Glas-Metall-Übergangsbereiches, nämlich der Verbindungsstelle zwischen dem GlasHüllrohr 4 und dem Glasmetallübergangselement 10.

Die Abschirmeinrichtung 50 weist einen ersten ringscheibenförmigen Abschnitt 52 auf, der beabstandet vor der Stirnfläche 110 angeordnet ist und den Verbindungsbereich 100 des Befestigungsabschnitts 36 des Anschlusselementes 30 und des Verbindungsabschnitt 26 des Faltenbalgs 20 abdeckt.

Der Verbindungsbereich 100 ist ohne Abschirmeinrichtung 50 sowohl der einfallenden als auch der vom Metallrohr 2 reflektierten Strahlung ausgesetzt und erfährt dadurch eine hohe thermische Belastung. Bei Undichtigkeiten im Verbindungsbereich 100 verschlechtert sich der Unterdruck im Ringraum 6. Durch die Abschirmeinrichtung 50 und insbesondere durch den ersten ringscheibenförmigen Abschnitt 52 wird die Lebensdauer des Absorberrohres 1 deutlich erhöht.

In der Figur 2a ist zu sehen, dass der erste ringscheibenförmige Abschnitt 52 um einen Winkel α∼ 10° gegenüber der Senkrechten S auf der Längsachse L des Absorberrohres 1 geneigt angeordnet ist. Die Neigung des ersten ringscheibenförmigen Abschnitts 52 ist derart gewählt, dass der radial außenliegende Rand 53a weiter in den Ringraum 6 hinein ragt als der radial innenliegende Rand 53b. Der geneigt ausgebildete erste ringförmige Abschnitt 52 reflektiert schräg einfallende Strahlung S1 zurück auf das Metallrohr 2. Schräg auf das Metallrohr 2 auftreffende Strahlung S2 und S3 wird auf den ersten ringscheibenförmigen Abschnitt 52 reflektiert, der die Strahlung vom Verbindungsbereich 100, vom Faltenbalg 20 sowie vom Glasmetallübergangselement 10 fernhält. Der erste ringscheibenförmige Abschnitt 52 bildet somit einen konischen Abschnitt der Abschirmeinrichtung 50. Die Abschirmeinrichtung 50 kontaktiert den Faltenbalg nicht.

In der hier gezeigten Ausführungsform schließt sich an das außenliegende Ende 53a ein erster rohrförmiger Abschnitt 54 an, der in einen zweiten ringscheibenförmigen Abschnitt 56 übergeht.

Der rohrförmige Abschnitt 34 des Anschlusselementes 30 ist ebenso wie der erste rohrförmige Abschnitt 54 konisch ausgebildet. In der hier dargestellten Ausführungsform liegt der erste rohrförmige Abschnitt 54 auf dem konischen Abschnitt 34 auf. Die Wärme des ersten rohrförmigen Abschnitts 54 wird über das Anschlusselement 30 an die Umgebungsluft abgegeben. Der Abschnitt 54 erstreckt sich nur teilweise in den Ringraumabschnitt 7, wobei sich in etwa der Mitte der Längserstreckung des Ringraumabschnitts 7 der zweite ringscheibenförmige Abschnitt 56 anschließt der an einer Ringschulter 12 des Glasmetallübergangselementes 10 an liegt. Dadurch wird der Ringraumabschnitt 7 in den Ringraumabschnitt 7a und die Ringkammer 7b unterteilt.

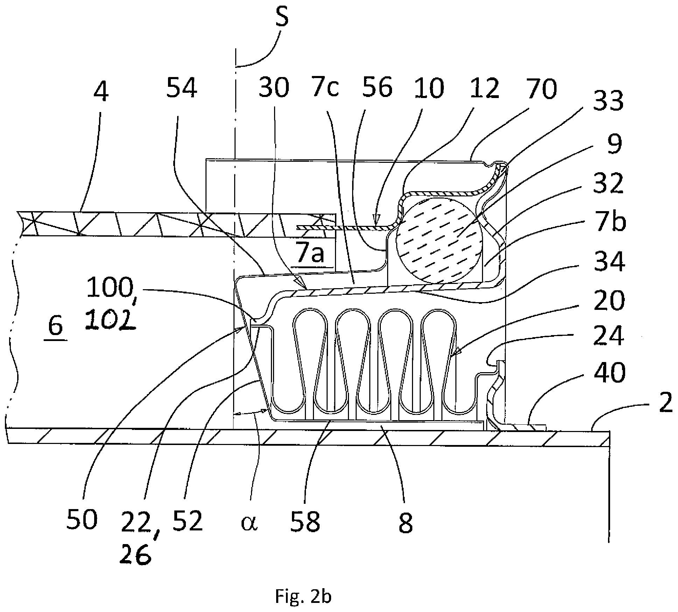

Das Glasmetallübergangselement 10 ist an einer Seite an dem Glashüllrohr 4 befestigt und erstreckt sich in axialer Richtung auswärts, wo am anderen Ende das Glasmetallübergangselement 10 mit dem Anschlusselement 30 verbunden ist. Die Ringschulter 12 führt zu einer Durchmessererweiterung, wodurch die Ringkammer 7 erweitert wird, so dass ausreichend Platz für die Unterbringung eines Getters 9 geschaffen wird (s. Fig. 2b). Der Getter 9 wird von dem Ringscheibenabschnitt 32, der hier vorzugsweise eine nach innen weisende Sicke 37 aufweist, und von dem zweiten ringförmigen Abschnitt 56 der Abschirmeinrichtung 50 gegen Verschieben in axialer Richtung gehalten.

Der erste ringscheibenförmige Abschnitt 52 erstreckt sich radial in Richtung Metallrohr 2, wo zwischen der Dehnungsausgleichseinrichtung 20 und dem Metallrohr 2 ein weiterer Ringraumabschnitt 8 gebildet wird. Der erste ringscheibenförmige Abschnitt 52 deckt die gesamte Stirnfläche 110 ab. Der Abschnitt 52 geht in einen zweiten rohrförmigen Abschnitt 58 über, der sich in diesem Ringraumabschnitt 18 bis nahezu an das Befestigungselement 40 erstreckt, so dass der Faltenbalg nicht nur an der Stirnfläche sondern auch an seiner Unterseite vor reflektierter und emittierter Strahlung des Metallrohres 2 geschützt wird.

In der Figur 2b ist eine zweite Ausführungsform dargestellt, die sich von der ersten Ausführungsform dadurch unterscheidet, dass der erste rohrförmige Abschnitt 54 nicht auf dem konischen Abschnitt 34 des Anschlusselementes 30 aufliegt, wodurch ein Ringraumabschnitt 7c geschaffen wird. Die Fläche des ersten ringscheibenförmigen Abschnitts 52 wird dadurch vergrößert, so dass mehr Strahlung S₂ und S₃ insbesondere vom Glas-Metallübergangselement 10 ferngehalten werden kann.

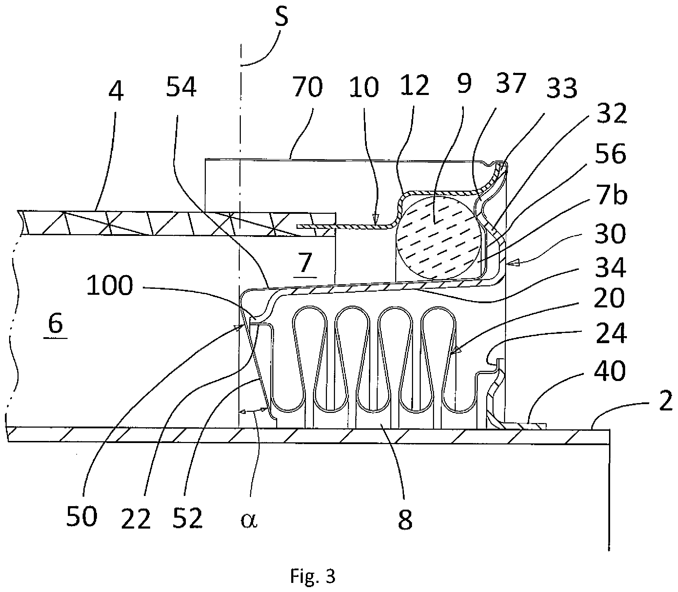

In der Figur 3 ist eine weitere Ausführungsform dargestellt, die sich von der in Figur 2a beschriebenen Ausführungsform dadurch unterscheidet, dass sich der erste rohrförmige Abschnitt 54 bis zum Ringscheibenabschnitt 32 des Anschlusselementes 30 erstreckt und dort im Bereich der Sicke 37 noch einmal anliegt. In diesem Fall wird der Getter 9 durch den Ringscheibenabschnitt 32 und die Ringstufe 12 des Glasmetallübergangselementes 10 gehalten. Außerdem unterscheidet sich diese Ausführungsform dadurch, dass kein Abschnitt 58 an der Abschirmeinrichtung 50 vorgesehen ist und dass der Ringraumabschnitt 7 nicht unterteilt ist. Die Außenschutzkappe 70 ist außen über den Befestigungsabschnitt 33 bis in die Sicke 37 hineingezogen und dort befestigt.

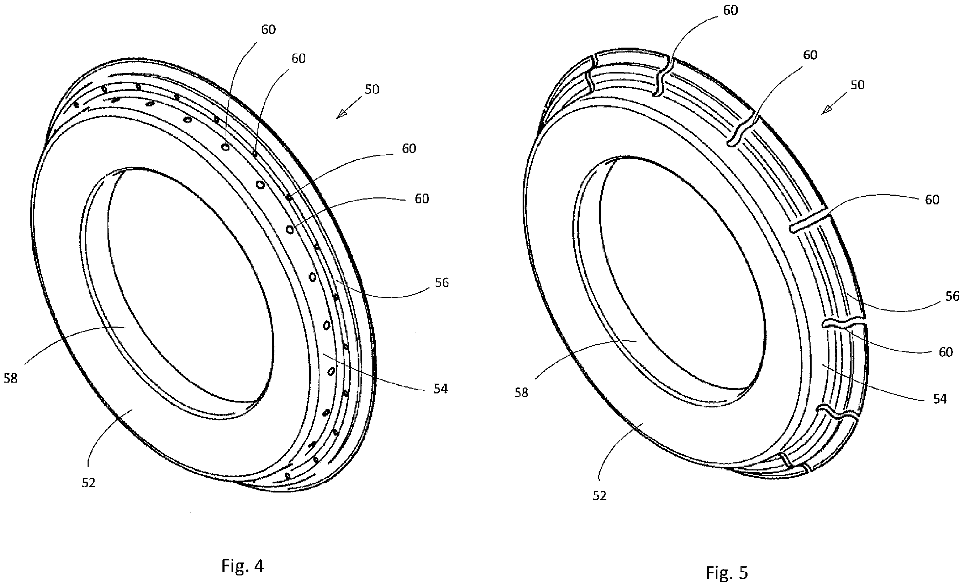

In der Figur 4 ist eine perspektivische Darstellung der Abschirmeinrichtung 50 zu sehen, die die Ausführungsform gemäß der Figur 2b zeigt. Damit Restgase im evakuierten Ringraum 6 zum Getter 9 gelangen können, sind sowohl im Abschnitt 54 als auch im Abschnitt 56 Öffnungen 60 in Form von Löchern eingebracht.

In der Figur 5 ist eine weitere Ausführungsform dargestellt, die an Stelle von Löchern Öffnungen 60 in Form von radialen Schlitzen aufweist.

In den beschriebenen Ausführungsformen ist die Abschirmeinrichtung 50 als einteiliges Element ausgeführt.

### Bezugszeichenliste

- 1: Absorberrohr
- 1a, b: Ende des Absorberrohres
- 2: Metallrohr
- 4: Glashüllrohr
- 5a, b: Ende des Hüllrohrs
- 6: innerer Ringraum
- 7,7a,c: innerer Ringraumabschnitt
- 7b: Ringkammer
- 8: Ringraumabschnitt
- 9: Getter

- 10: Glasmetallübergangselement
- 12: Ringstufe
- 15: äußerer Ringraum

- 20: Dehnungsausgleichseinrichtung
- 22: inneres Ende
- 24: äußeres Ende
- 26: Verbindungsabschnitt

- 30: Anschlusselement
- 32: Ringscheibenabschnitt
- 33: radial sich nach außen erstreckender Befestigungsabschnitt
- 34: rohrförmiger Abschnitt
- 36: radial sich nach innen erstreckender Befestigungsabschnitt
- 37: Sicke

- 40: Befestigungselement

- 50: Abschirmeinrichtung
- 52: erster ringscheibenförmiger Abschnitt
- 53a: radial außenliegender Rand
- 53b: radial innenliegender Rand
- 54: erster rohrförmiger Abschnitt
- 56: zweiter ringscheibenförmiger Abschnitt
- 58: zweiter rohrförmiger Abschnitt

- 60: Öffnung

- 70: Außenschutzkappe

- 100: Verbindungsbereich von Anschlusselement und Dehnungsausgleichseinrichtung
- 102: Verbindungsstelle
- 110: Stirnfläche

- B: Breite der kreisringförmigen Stirnfläche
- L: Längsachse des Absorberrohres
- S: Senkrechte
- S₁: Strahlungspfeil
- S₂: Strahlungspfeil
- S₃: Strahlungspfeil
- α: Neigungswinkel des ersten ringscheibenförmigen Abschnitts

## Patentansprüche

1. Absorberrohr (1) mit einem zentralen Metallrohr (2) und
mit einem das zentrale Metallrohr (2) umgebenden Glashüllrohr (4), wobei an mindestens einem Ende (5a,b) des Glashüllrohrs (4) ein Glasmetallübergangselement (10) angeordnet ist,
wobei das Metallrohr (2) und das Glasmetallübergangselement (10) mittels mindestens einer Dehnungsausgleichseinrichtung (20) in Längsrichtung relativ zueinander verschiebbar und miteinander verbunden sind, wobei die mindestens eine Dehnungsausgleichseinrichtung (20) mindestens teilweise in einem Ringraum (6) zwischen dem Metallrohr (2) und dem Glasmetallübergangselement (10) angeordnet ist,
wobei ein inneres Ende (22) der mindestens einen Dehnungsausgleichseinrichtung (20) an einem Anschlusselement (30) befestigt ist, das mit dem Glasmetallübergangselement (10) verbunden ist, und ein äußeres Ende (24) der Dehnungsausgleichseinrichtung (20) am Metallrohr (2) befestigt ist,
wobei zwischen dem Glasmetallübergangselement (10) und dem Anschlusselement (30) ein Ringraumabschnitt (7) des Ringraumes (6) ausgebildet ist, und wobei das Anschlusselement (30) und die mindestens eine Dehnungsausgleichseinrichtung (20) in axialer Draufsicht eine kreisringförmige Stirnfläche (110) aufweisen,
**dadurch gekennzeichnet,**
**dass** an mindestens einem Ende (1a,b) des Absorberrohres (1) im Ringraum (6) mindestens eine Abschirmeinrichtung (50) angeordnet ist,
die einen ersten ringscheibenförmigen Abschnitt (52) aufweist, der in axialer Richtung beabstandet vor der Stirnfläche (110) angeordnet ist und mindestens den Verbindungsbereich (100) von Anschlusselement (30) und innerem Ende (22) der Dehnungsausgleichseinrichtung (20) abdeckt.

2. Absorberrohr nach Anspruch 1, **dadurch gekennzeichnet, dass** der erste ringscheibenförmige Abschnitt (52) bezüglich einer Senkrechten S auf einer Längsachse L des Absorberrohres (1) um einen Winkel α ≥ 0 geneigt angeordnet ist.

3. Absorberrohr nach einem der Anspruch 2, **dadurch gekennzeichnet, dass** der Winkel α im Bereich von 0° - 30° liegt.

4. Absorberrohr nach einem der Ansprüche 1 bis 3, **dadurch gekennzeichnet, dass** die Abschirmeinrichtung (50) sich mindestens teilweise in den Ringraumabschnitt (7) erstreckt.

5. Absorberrohr nach einem der Ansprüche 1 bis 4, **dadurch gekennzeichnet, dass** der erste ringscheibenförmige Abschnitt (52) an einem radial außen liegenden Rand (53a) in einen ersten rohrförmigen Abschnitt (54) übergeht, der sich in den Ringraumabschnitt (7) erstreckt.

6. Absorberrohr nach Anspruch 5, **dadurch gekennzeichnet, dass** der erste rohrförmige Abschnitt (54) zylindrisch oder konisch ausgebildet ist.

7. Absorberrohr nach einem der Ansprüche 5 bis 6, **dadurch gekennzeichnet, dass** die mindestens eine Abschirmeinrichtung (50) einen zweiten ringscheibenförmigen Abschnitt (56) aufweist.

8. Absorberrohr nach Anspruch 7, **dadurch gekennzeichnet, dass** der zweite ringscheibenförmige Abschnitt (56) an dem Glasmetallübergangselement (10) oder an einem Ringscheibenabschnitt (32) des Anschlusselementes (30) anliegt.

9. Absorberrohr nach einem der Ansprüche 7 oder 8, **dadurch gekennzeichnet, dass** das Glasmetallübergangselement (10) eine Ringstufe (12) aufweist, an der sich der zweite ringscheibenförmige Abschnitt (56) der mindestens einen Abschirmeinrichtung (50) abstützt.

10. Absorberrohr nach einem der Ansprüche 7 bis 9, **dadurch gekennzeichnet, dass** der zweite ringscheibenförmige Abschnitt (56) der mindestens einen Abschirmeinrichtung (50) vom Ringraumabschnitt (7) eine Ringkammer (7b) abtrennt, die zwischen dem zweiten ringscheibenförmigen Abschnitt (56) und einem ringscheibenförmigen Abschnitt (32) des Anschlusselementes (30) angeordnet ist.

11. Absorberrohr nach einem der Ansprüche 5 bis 10, **dadurch gekennzeichnet, dass** der erste rohrförmige Abschnitt (54) der mindestens einen Abschirmeinrichtung (50) im Abstand zum Anschlusselement (30) angeordnet ist.

12. Absorberrohr nach einem der Ansprüche 5 bis 11, **dadurch gekennzeichnet, dass** der erste rohrförmige Abschnitt (54) das Anschlusselement (30) kontaktiert.

13. Absorberrohr nach einem der Ansprüche 1 bis 12, **dadurch gekennzeichnet, dass** sich der erste ringscheibenförmige Abschnitt (52) der mindestens einen Abschirmeinrichtung (50) bis zu einem Ringraumabschnitt (8) zwischen der mindestens einen Dehnungsausgleichseinrichtung (20) und dem Metallrohr (2) erstreckt.

14. Absorberrohr nach Anspruch 13, **dadurch gekennzeichnet, dass** die mindestens eine Abschirmeinrichtung (50) einen zweiten rohrförmigen Abschnitt (58) aufweist, der sich mindestens teilweise in den Ringraumabschnitt (8) erstreckt.

15. Absorberrohr nach einem der Ansprüche 1 bis 14, **dadurch gekennzeichnet, dass** die mindestens eine Abschirmeinrichtung (50) Öffnungen (60) aufweist.

## Claims

1. Absorber tube (1) having a central metal tube (2) and having a glass sleeve tube (4) surrounding the central metal tube (2), wherein a glass-metal transition element (10) is arranged at at least one end (5a,b) of the glass sleeve tube (4),
wherein the metal tube (2) and the glass-metal transition element (10) are connected to one another by means of at least one expansion compensation device (20) so that they can move relative to one another in the longitudinal direction, wherein the at least one expansion compensation device (20) is arranged at least partially in an annular space (6) between the metal tube (2) and the glass-metal transition element (10),
wherein an inner end (22) of the at least one expansion compensation device (20) is attached to a connection element (30) which is connected to the glass-metal transition element (10), and an outer end (24) of the expansion compensation device (20) is attached to the metal tube (2),
wherein an annular space section (7) of the annular space (6) is formed between the glass-metal transition element (10) and the connection element (30), and wherein the connection element (30) and the at least one expansion compensation device (20) have a circular end face (110) as seen in the axial direction,
**characterized in that**
at least one shielding device (50) is arranged at at least one end (1a,b) of the absorber tube (1), in the annular space (6),
which shielding device (50) has a first washer-shaped section (52) which is arranged in front of and spaced apart from the end face (110) in the axial direction, and covers at least the connection region (100) of the connection element (30) and the inner end (22) of the expansion compensation device (20).

2. Absorber tube according to Claim 1, **characterized in that** the first washer-shaped section (52) is arranged inclined at an angle α ≥ 0 with respect to a line S perpendicular to a longitudinal axis L of the absorber tube (1).

3. Absorber tube according to Claim 2, **characterized in that** the angle α is in the range from 0° to 30°.

4. Absorber tube according to one of Claims 1 to 3, **characterized in that** the shielding device (50) extends at least partially into the annular space section (7).

5. Absorber tube according to one of Claims 1 to 4, **characterized in that** the first washer-shaped section (52) transitions, at a radially outer rim (53a), into a first tubular section (54) that extends into the annular space section (7).

6. Absorber tube according to Claim 5, **characterized in that** the first tubular section (54) is cylindrical or conical.

7. Absorber tube according to one of Claims 5 and 6, **characterized in that** the at least one shielding device (50) has a second washer-shaped section (56).

8. Absorber tube according to Claim 7, **characterized in that** the second washer-shaped section (56) bears against the glass-metal transition element (10) or against a washer section (32) of the connection element (30).

9. Absorber tube according to one of Claims 7 and 8, **characterized in that** the glass-metal transition element (10) has an annular step (12) which receives the second washer-shaped section (56) of the at least one shielding device (50).

10. Absorber tube according to one of Claims 7 to 9, **characterized in that** the second washer-shaped section (56) of the at least one shielding device (50) separates an annular chamber (7b) from the annular space section (7), which annular chamber is arranged between the second washer-shaped section (56) and a washer-shaped section (32) of the connection element (30).

11. Absorber tube according to one of Claims 5 to 10, **characterized in that** the first tubular section (54) of the at least one shielding device (50) is arranged at a distance from the connection element (30).

12. Absorber tube according to one of Claims 5 to 11, **characterized in that** the first tubular section (54) is in contact with the connection element (30).

13. Absorber tube according to one of Claims 1 to 12, **characterized in that** the first washer-shaped section (52) of the at least one shielding device (50) extends up to an annular space section (8) between the at least one expansion compensation device (20) and the metal tube (2).

14. Absorber tube according to Claim 13, **characterized in that** the at least one shielding device (50) has a second tubular section (58) which extends at least partially into the annular space section (8).

15. Absorber tube according to one of Claims 1 to 14, **characterized in that** the at least one shielding device (50) has openings (60).

## Revendications

1. Tube absorbeur (1) avec un tube métallique central (2) et une gaine en verre (4) entourant le tube métallique central (2), dans lequel un élément de transition verre-métal (10) est disposé à au moins une extrémité (5a, b) de la gaine en verre (4),
dans lequel le tube métallique (2) et l'élément de transition verre-métal (10) sont déplaçables l'un par rapport à l'autre en direction longitudinale et assemblés l'un à l'autre au moyen d'au moins un dispositif de compensation d'allongement (20), dans lequel ledit au moins un dispositif de compensation d'allongement (20) est disposé au moins en partie dans une chambre annulaire (6) entre le tube métallique (2) et l'élément de transition verre-métal (10),
dans lequel une extrémité intérieure (22) dudit au moins un dispositif de compensation d'allongement (20) est fixée à un élément de raccordement (30), qui est assemblé à l'élément de transition verre-métal (10), et une extrémité extérieure (24) du dispositif de compensation d'allongement (20) est fixée au tube métallique (2),
dans lequel une partie de chambre annulaire (7) de la chambre annulaire (6) est formée entre l'élément de transition verre-métal (10) et l'élément de raccordement (30), et dans lequel l'élément de raccordement (30) et ledit au moins un dispositif de compensation d'allongement (20) présentent dans une vue en plan axiale une face frontale annulaire circulaire (110),
**caractérisé en ce qu'**au moins un dispositif de protection (50) est disposé dans la chambre annulaire (6) à au moins une extrémité (1a, b) du tube absorbeur (1) et présente une première partie en forme de disque annulaire (52), qui est disposée à distance en direction axiale devant la face frontale (110) et qui recouvre au moins la zone de liaison (100) de l'élément de raccordement (30) avec l'extrémité intérieure (22) du dispositif de compensation d'allongement (20).

2. Tube absorbeur selon la revendication 1, **caractérisé en ce que** la première partie en forme de disque annulaire (52) est inclinée d'un angle α ≥ 0 par rapport à une perpendiculaire S à un axe longitudinal L du tube absorbeur (1).

3. Tube absorbeur selon la revendication 2, **caractérisé en ce que** l'angle α se situe dans la plage de 0° à 30°.

4. Tube absorbeur selon l'une quelconque des revendications 1 à 3, **caractérisé en ce que** le dispositif de protection (50) s'étend au moins en partie dans la partie de chambre annulaire (7).

5. Tube absorbeur selon l'une quelconque des revendications 1 à 4, **caractérisé en ce que** la première partie en forme de disque annulaire (52) se prolonge, sur un bord situé radialement à l'extérieur (53a), en une première partie tubulaire (54), qui s'étend dans la partie de chambre annulaire (7).

6. Tube absorbeur selon la revendication 5, **caractérisé en ce que** la première partie tubulaire (54) est de forme cylindrique ou conique.

7. Tube absorbeur selon une des revendications 5 à 6, **caractérisé en ce que** ledit au moins un dispositif de protection (50) présente une deuxième partie en forme de disque annulaire (56).

8. Tube absorbeur selon la revendication 7, **caractérisé en ce que** la deuxième partie en forme de disque annulaire (56) s'applique sur l'élément de transition verre-métal (10) ou sur une partie de disque annulaire (32) de l'élément de raccordement (30).

9. Tube absorbeur selon une des revendications 7 ou 8, **caractérisé en ce que** l'élément de transition verre-métal (10) présente un épaulement annulaire (12), sur lequel s'appuie la deuxième partie en forme de disque annulaire (56) dudit au moins un dispositif de protection (50).

10. Tube absorbeur selon l'une quelconque des revendications 7 à 9, **caractérisé en ce que** la deuxième partie en forme de disque annulaire (56) dudit au moins un dispositif de protection (50) sépare de la partie de chambre annulaire (7) une chambre annulaire (7b), qui est disposée entre la deuxième partie en forme de disque annulaire (56) et une partie en forme de disque annulaire (32) de l'élément de raccordement (30).

11. Tube absorbeur selon l'une quelconque des revendications 5 à 10, **caractérisé en ce que** la première partie tubulaire (54) dudit au moins un dispositif de protection (50) est disposée à distance de l'élément de raccordement (30).

12. Tube absorbeur selon l'une quelconque des revendications 5 à 11, **caractérisé en ce que** la première partie tubulaire (54) touche l'élément de raccordement (30).

13. Tube absorbeur selon l'une quelconque des revendications 1 à 12, **caractérisé en ce que** la première partie en forme de disque annulaire (52) dudit au moins un dispositif de protection (50) s'étend jusqu'à une partie de chambre annulaire (8) entre ledit au moins un dispositif de compensation d'allongement (20) et le tube métallique (2).

14. Tube absorbeur selon la revendication 13, **caractérisé en ce que** ledit au moins un dispositif de protection (50) présente une deuxième partie tubulaire (58), qui s'étend au moins en partie dans la partie de chambre annulaire (8).

15. Tube absorbeur selon l'une quelconque des revendications 1 à 14, **caractérisé en ce que** ledit au moins un dispositif de protection (50) présente des ouvertures (60).
